Europäisches Patentamt

European Patent Office

Office européen des brevets

(11) Publication number: **0 096 011**
**B1**

(12) **EUROPEAN PATENT SPECIFICATION**

(45) Date of publication of patent specification: **02.04.86**

(51) Int. Cl.⁴: **F 16 H 37/02**

(21) Application number: **83830096.0**

(22) Date of filing: **17.05.83**

(54) **Drive transmission device for motor vehicles.**

(30) Priority: **28.05.82 IT 6768982**

(43) Date of publication of application:
**07.12.83 Bulletin 83/49**

(45) Publication of the grant of the patent:
**02.04.86 Bulletin 86/14**

(84) Designated Contracting States:
**AT BE CH DE FR GB LI NL SE**

(56) References cited:
**EP-A-0 035 806**
**CH-A- 94 971**
**GB-A-2 039 640**
**GB-A-2 064 683**

(73) Proprietor: **FIAT AUTO S.p.A.**
**Corso Giovanni Agnelli 200**
**I-10135 Torino (IT)**

(72) Inventor: **Falzoni, Gianluigi**
**Via Malta 36/10 bis**
**I-10141 Torino (IT)**

(74) Representative: **Buzzi, Franco et al**
**c/o Jacobacci-Casetta & Perani S.p.A. Via Alfieri, 17**
**I-10121 Torino (IT)**

Courier Press, Leamington Spa, England.

## Description

The present invention relates to a device for transmitting drive from the engine driving shaft to the axle-shafts of the driven wheels of a motor vehicle, of the type comprising a drive shaft driven by the engine driving shaft, a main shaft driven by the drive shaft and carrying an expansible driving pulley, a driven shaft carrying an expansible driven pulley which is driven by a V-belt from the driving pulley to transmit drive from the drive shaft to the driven shaft, hydraulically-operated means for controlling the expansion of the expansible driving and driven pulleys, an epicyclic reverser unit for the transmission of drive from the drive shaft to the main shaft in the reversing condition, hydraulically-operated means for controlling the epicyclic reverser unit, an intermediate shaft provided with gears connected to the driven shaft, and a differential driven by the intermediate shaft and driving the two axle-shafts of the vehicle.

More particularly the invention relates to a transmission device of the aforesaid type wherein the epicyclic reverser unit is constituted by a fixed support structure, an input sun wheel carried by the drive shaft, an output sun wheel carried by the main shaft, a planet carrier, a plurality of pairs of meshed planet wheels rotatable on pins carried by the planet carrier, one wheel of each pair meshing with the input sun wheel and the other wheel of each pair meshing with the output sun wheel, and a hydraulically-operated friction clutch which is operable to render the planet carrier rigid with the fixed support structure in the reversing condition.

A drive unit of the above mentioned type is generally known from E P—A—35806.

According to this publication the transmission of drive from the drive shaft to the hollow main shaft takes place through a pair of clutches cooperating with a conical gear assembly for effecting forward and rearward movement of the vehicle respectively.

The object of the present invention is to provide a more advantageous transmission of the aforesaid type which is of small bulk and limited cost, and this object is achieved by means of a transmission device of the type described above, characterized in that the drive shaft is connected drivingly to the main shaft through a friction clutch in the forward movement condition.

One embodiment of the invention will now be described, by way of example, with reference to the single appended drawing which shows a device according to the present invention partially sectioned along its longitudinal axis.

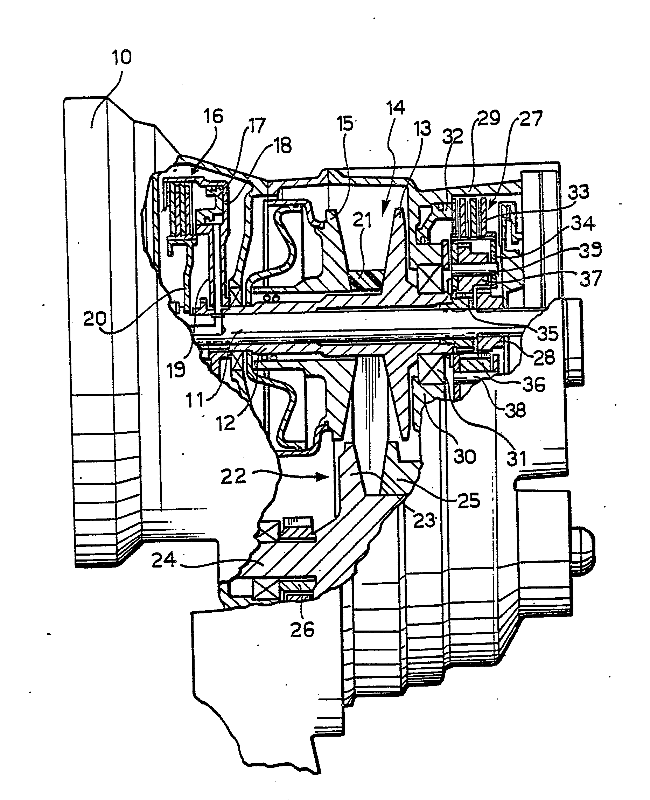

Referring now to the drawing, an annular fly-wheel and vibration damping unit 10 of a motor vehicle engine is connected to a drive shaft 11 which is rotatably mounted in bearings and is driven by the driving shaft (not shown) of the engine through the unit 10.

A hollow main shaft 12 is mounted coaxially and rotatably on the drive shaft 11, and is formed in one piece with one half-pulley 13 of an expansible driving pulley 14. The other half-pulley 15 of the driving pulley 14 is keyed onto the shaft 12 so as to be axially slidable thereon.

The drive shaft 11 and the hollow main shaft 12 may be connected together by means of a multiple-disc friction clutch 16 driven by an annular drive piston 17 which is slidable in an annular cylinder 18 formed in an annular support structure 19. The support structure 19 is keyed to the main shaft and carries the thrust discs of the clutch 12, while the friction discs are carried by an annular structure 20 keyed to the drive shaft 11. The piston 17 is controlled hydraulically by known means (not shown).

A V-belt 21 connects the driving pulley 14 to an expansible driven pulley 22. One half-pulley 23 of the driven pulley 22 is formed integrally with a driven shaft 24 rotatably mounted parallel to the shaft 11, and the other half-pulley 25 is keyed to the shaft 24 for axial sliding movement thereon.

A gear 26 keyed to the shaft 24 transmits drive through a series of gears (not shown) to the differential. The drive shaft 11 also constitutes the input shaft of an epicyclic reverser unit, generally indicated 27. The input sun wheel 28 of this reverser unit 27 is keyed onto the drive shaft 11.

The wall 29 of the housing for the transmission device forms, in correspondence with the reverser unit 27, an annular fixed structure 30 supporting a bearing 31 in which the main shaft 12 rotates.

In its part adjacent the wall 29, this annular structure 30 defines an annular cylinder in which an annular piston 32 is slidable. This piston 32 is operated hydraulically by means of a pressurised oil fed by a pump (not shown).

The discs of a friction clutch 33 are interposed between the wall 29 and an axial annular flange of a planet carrier 34 centered on the sun wheel 28 and a second, output sun wheel 35 keyed onto the main shaft 12.

The planet carrier 34 carries three pairs of meshing planet wheels 36, 37 which are rotatable on respective pins 38, 39. One wheel 36 of each pair meshes with the input sun wheel 28, while the other wheel 38 of each pair meshes with the output sun wheel 35 on the main shaft 12.

The transmission described above operates as follows.

In order to effect forward movement of the vehicle, it suffices to operate the friction clutch 16 to render the drive shaft 11 rigid with the main shaft 12, so that the main shaft 12 is driven in the same direction as the drive shaft 11.

In order to effect reverse movement, however, it is necessary to operate the friction clutch 33 instead of the clutch 16, so as to render the planet carrier 34 rigid with the fixed structure 30. The drive from the shaft 11 is then transmitted to the main shaft 12 in the opposite direction through the gears 35, 36, 37.

In both directions of movement, the drive is transmitted from the main shaft 12 to the driven shaft 24, and thence to the differential and axle-shafts, by the pulleys 14, 22 and their V-belt 21.

The selective operation of the clutches 16, 33 is effected in a known manner through control means (not shown), comprising a selector which operates a distributor ·controlling the flow of oil supplied by a pump.

### Claim

Device for transmitting drive from the engine driving shaft to the axle-shafts of the driven wheels of a motor vehicle comprising:

— a drive shaft (11) driven by the engine driving shaft;
— a main shaft (12) driven by the drive shaft (11) and carrying an expansible driving pulley (14);
— a driven shaft (24) carrying an expansible driven pulley (22) which is driven by a V-belt (21) from the driving pulley (14) to transmit drive from the drive shaft (11) to the driven shaft (24);
— hydraulically-operated means for controlling the expansion of the expansible driving and driven pulleys (14, 22);
— an epicyclic reverser unit (27) for the transmission of drive from the drive shaft (11) to the main shaft (12) in the reversing condition;
— hydraulically-operated means (33) for controlling the epicyclic reverser unit (27);
— an intermediate shaft connected by gears to the driven shaft (24);
— a differential driven by the intermediate shaft and driving the two axle-shafts of the vehicle;

wherein the epicyclic reverser unit (27) is constituted by:

— a fixed support structure (29, 30);
— an input sun wheel (28) carried by the drive shaft (11);
— an output sun wheel (35) carried by the main shaft (12);
— a planet carrier (34);
— a plurality of pairs of meshed planet wheels (36, 37) rotatable on pins (38, 39) carried by the planet carrier (34), one wheel (36) of each pair meshing with the input sun wheel (28) and the other wheel (37) of each pair meshing with the output sun wheel (35), and
— a hydraulically-operated friction clutch (33) which is operable to render the planet carrier (34) rigid with the fixed support structure (29, 30) in the reversing condition,

characterized in that the drive shaft (11) is connected drivingly to the main shaft (12) through a friction clutch (16) in the forward movement condition.

### Revendication

Dispositif destiné à transmettre le mouvement de l'arbre de sortie du moteur aux demi-arbres des roues motrices d'un véhicule automobile, comprenant: un arbre de transmission (11) entraîné par l'arbre de sortie du moteur; un arbre principal (12) entraîné par l'arbre de transmission (11) et portant une poulie motrice expansible (14); un arbre récepteur (24) portant une poulie réceptrice expansible (22) qui est entraînée par une courroie trapézoïdale (21) à partir de la poulie motrice (14) pour transmettre le mouvement de l'arbre de transmission (11) à l'arbre récepteur (24); des moyens actionnés hydrauliquement pour commander la dilatation des poulies expansibles motrice et réceptrice (14, 22); une unité inverseur épicycloïdal (27) servant à transmettre le mouvement de l'arbre de transmission (11) à l'arbre principal (12) pour la marche arrière; des moyens (33) actionnés hydrauliquement pour commander l'unité inverseur épicycloïdal (27); un arbre intermédiaire relié à l'arbre récepteur (24) par des engrenages; un différentiel entraîne par l'arbre intermédiaire et qui entraîne les deux demi-arbres du véhicule; dans lequel l'unité inverseur épicycloïdal (27) est constituée par: une structure support fixe (29, 30); une roue plannétaire d'entrée (28) portée par l'arbre de transmission (11); une roue planétaire de sortie (35) portée par l'arbre principal (12); un porte-satellites (34); une pluralité de paires de·roues satellites (36, 37) en prise, qui tourillonnent sur des axes (38, 39) portés par le porte-satellites (34), une roue (36) de chaque paire engrenant avec la roue planétaire d'entrée (28) et l'autre roue (37) de chaque paire engrenant avec la roue planétaire de sortie (35), et un embrayage à friction actionné hydrauliquement (33) que l'on peut actionner pour rendre le porte-satellites (34) rigidement solidaire de la structure support fixe (29, 30) pour la marche arrière, caractérisé en ce que l'arbre de transmission (11) est accouplé à l'arbre principal (12) pour la transmission du mouvement par l'intermédiaire d'un embrayage à friction (16) pour la marche avant.

### Patentanspruch

Vorrichtung zur Antriebsübertragung von der Motorantriebswelle auf die Achswellen der getriebenen Räder eines Kraftfahrzeuges, mit einer von der Motorantriebswelle getriebenen Antriebswelle (11), einer von der Antriebswelle (11) getriebenen Hauptwelle (12), welche eine erweiterbare Antriebsscheibe (14) trägt, einer getriebenen Welle (24), welche eine erweiterbare getriebene Scheibe (22) trägt, die über einen Keilriemen (21) von der Antriebsscheibe (14) angetrieben wird und den Antrieb von der Antriebswelle (11) auf die getriebene Welle (24) überträgt, einer hydraulisch betätigten Einrichtung, welche die Erweiterung der erweiterbaren Antriebsscheibe (14) und der erweiterbaren getriebenen Scheibe (22) regelt, einer Planeten - Umsteuereinheit (27), welche den Antrieb im Rückwärtsfahrtzustand von der Antriebswelle (11) auf die Hauptwelle (12) überträgt, einer hydraulisch betätigten Einrichtung (33), welche die Planeten - Umsteuereinheit (27) steuert, einer über Zahnräder mit der getriebenen Welle (24) verbundenen Zwischenwelle und einem von der Zwischenwelle getriebenen Differential, welches die beiden Achswellen des Fahrzeuges antreibt, wobei die Planeten - Umsteuereinheit (27) folgendes aufweist:

— einen festen Rahmenaufbau (29, 30);
— ein Eingangs-Sonnenrad (28), welches von der Antriebswelle (11) getragen wird;
— ein Ausgangs-Sonnenrad (35), welches von der Hauptwelle (12) getragen wird;
— einen Planetenradträger (34);
— eine Mehrzahl von Paaren ineinandergreifender Planetenräder (36, 37), welche auf Stiften (38, 39) drehbar sind, die vom Planetenradträger (34) getragen werden, wobei ein Rad (36) jedes Paares mit dem Eingangs-Sonnenrad (28) und das andere Rad (37) jedes Paares mit dem Ausgangs-Sonnenrad (35) ineinandergreift; und
— eine hydraulisch betätigte Reibungskupplung (33), welche so betätigbar ist, daß sie den Planetenradträger (34) im Rückwärtsfahrtzustand mit dem festen Rahmenaufbau (29, 30) verbindet, dadurch gekennzeichnet, daß die Antriebswelle (11) im Vorwärtsfahrtzustand über eine Reibungskupplung (16) in Antriebsverbindung mit der Hauptwelle (12) gebracht wird.